(19) Europäisches Patentamt
European Patent Office
Office européen des brevets

(11) **EP 3 119 086 A1**

(12) **EUROPEAN PATENT APPLICATION**

(43) Date of publication:
**18.01.2017 Bulletin 2017/03**

(51) Int Cl.:
***H04N 9/67*** *(2006.01)*

(21) Application number: **15306172.6**

(22) Date of filing: **17.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **FRANCOIS, Edouard**
**35576 CESSON-SEVIGNE (FR)**

• **LOPEZ, Patrick**
**35576 CESSON-SEVIGNE (FR)**
• **ANDRIVON, Pierre**
**35576 CESSON-SEVIGNE (FR)**
• **OLIVIER, Yannick**
**35576 CESSON-SEVIGNE (FR)**

(74) Representative: **Huchet, Anne et al**
**TECHNICOLOR**
**1-5, rue Jeanne d'Arc**
**92130 Issy-les-Moulineaux (FR)**

(54) **METHODS AND DEVICES FOR ENCODING/DECODING VIDEOS**

(57)      A method is disclosed that comprises :
obtaining (S10) a video from a stream;
obtaining (S12) a piece of information representative of a version of a piece of color mapping information;
determining (S14) a piece of color mapping information responsive to said piece of information representative of a version; and
color mapping (S16) the decoded video with said determined piece of color mapping information.

FIGURE 4

**Description**

**1. TECHNICAL FIELD**

In the following, a method for decoding a video and a decoding device are disclosed. Corresponding encoding method and encoding device are further disclosed.

**2. BACKGROUND ART**

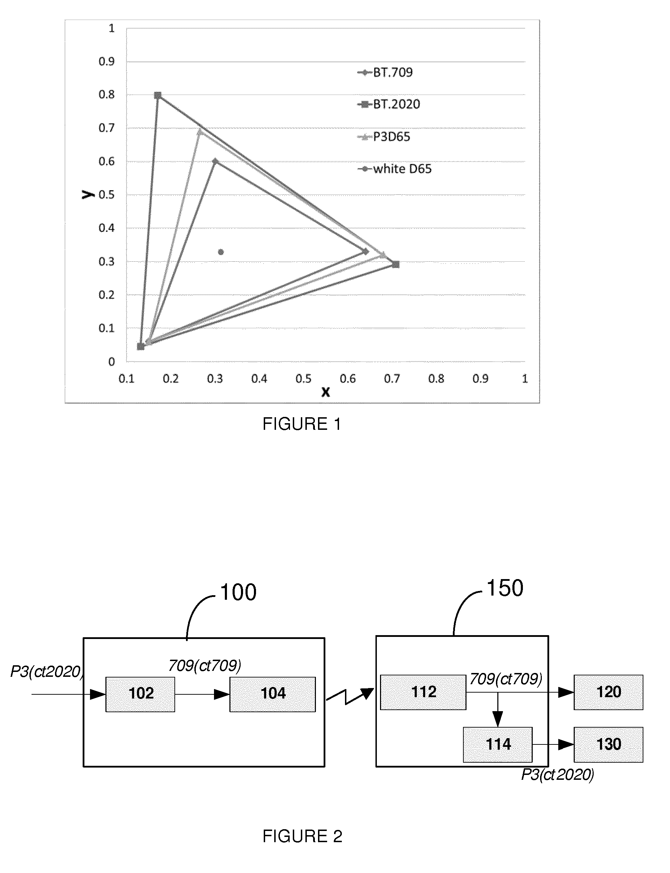

A color gamut is a certain complete set of colors in a color space. A color gamut is typically defined in a given color space (e.g. CIE xyY color space) by color primaries (in general three primaries, which results in a triangle in a chromaticity diagram) and a white point. **Figure 1** shows the BT.709, BT.2020 and P3D65 color gamuts in the CIE 1931 xy chromaticity diagram, including the D65 white point that is part of those color gamuts.

The deployment of WCG (English acronym of Wide Color Gamut) video is envisioned in the short-term future. However, not all the rendering devices will be able to render WCG content. Therefore, a gamut mapping process, also known as color mapping process, may be required to convert the WCG content into a color gamut adapted to the rendering device. P3/BT.2020 are examples of WCG while BT.709 is an example of a narrower color gamut. It is expected that most of the content produced in the mid-term future will be BT.2020 or P3 content, i.e. a content represented in a BT.2020 or P3 color gamut. For the purpose of backward compatibility with BT.709 devices, the color mapping of a P3 content into a BT.709 content is desirable while keeping the ability to restore the BT.2020 content from the BT.709 content. The color mapping process has thus to be invertible. A color mapping process usually makes use of color mapping information or color mapping data. An example of such color mapping information is the Supplemental Enhancement Information (SEI) message defined in sections D.2.32 and D.3.32 of the document ITU-T H.265 (also known as HEVC video coding standard) published in April 2015. The color mapping information of section D.3.32 defines color mapping functions such 1D LUTs (English acronym of Look-Up Table) and 3x3 matrix. This color mapping information may be content dependent and transmitted for example with an encoded BT.709 video content so that one is able to reconstruct a BT.2020 video content from the decoded BT.709 video content and the color mapping information. However, transmitting such color mapping information may be costly in terms of bitrate especially in the context of video broadcasting.

**3. BRIEF SUMMARY**

According to an aspect of the present principles, a method is disclosed comprising obtaining a video from a stream; obtaining a piece of information representative of a version of a piece of color mapping information; determining a piece of color mapping information responsive to said piece of information representative of a version; and color mapping the obtained video with said determined piece of color mapping information.

The present embodiments also provide a device comprising means for obtaining a video from the at least one stream; means for obtaining a piece of information representative of a version of a piece of color mapping information; means for determining a piece of color mapping information responsive to said piece of information representative of a version; and means for color mapping the obtained video with said determined piece of color mapping information.

Advantageously, obtaining a piece of information representative of a version of a piece of color mapping information comprises decoding an identifier from a stream indicating a version of a piece of color mapping information.

The present embodiments also provide a device comprising a communication interface configured to access at least one stream and at least one processor configured to obtain a video from the at least one stream; obtain a piece of information representative of a version of a piece of color mapping information; determine a piece of color mapping information responsive to said piece of information representative of a version; and color map the obtained video with said determined piece of color mapping information.

Advantageously, to obtain a piece of information representative of a version of a piece of color mapping information comprises decoding an identifier from a stream indicating a version of a piece of color mapping information.

The present embodiments also provide a computer program product comprising program code instructions to execute the following steps when this program is executed on a computer: obtaining a video from a stream; obtaining a piece of information representative of a version of a piece of color mapping information; determining a piece of color mapping information responsive to said piece of information representative of a version; and color mapping the obtained video with said determined piece of color mapping information.

The present embodiments also provide a non-transitory computer readable medium with instructions stored therein which, upon execution, instruct at least one processor to: obtain a video from the at least one stream; obtain a piece of information representative of a version of a piece of color mapping information; determine a piece of color mapping information responsive to said piece of information representative of a version; and color map the obtained video with said determined piece of color mapping information.

According to another aspect of the present principles, a method is disclosed that comprises encoding a video from a stream; obtaining a piece of information representative of a version of a piece of color mapping information; encoding said piece of information representative of a version.

The present embodiments also provide a device comprising means for encoding a video from a stream; means for obtaining a piece of information representative of a version of a piece of color mapping information; and means for encoding said piece of information representative of a version.

Advantageously, encoding said piece of information representative of a version of a piece of color mapping information comprises encoding an identifier in a stream indicating a version of a piece of color mapping information.

The present embodiments also provide a device comprising a communication interface configured to access at least one video and at least one processor configured to encode the at least one video in a stream; obtain a piece of information representative of a version of a piece of color mapping information; and encode said piece of information representative of a version.

Advantageously, to encode said piece of information representative of a version of a piece of color mapping information comprises encoding an identifier in a stream indicating a version of a piece of color mapping information.

The present embodiments also provide a non-transitory computer readable medium with instructions stored therein which, upon execution, instruct at least one processor to: encode a video from a stream; obtain a piece of information representative of a version of a piece of color mapping information; and encode said piece of information representative of a version.

The present embodiments also provide a computer program product comprising program code instructions to execute the following steps when this program is executed on a computer: encoding a video from a stream; obtaining a piece of information representative of a version of a piece of color mapping information; encoding said piece of information representative of a version.

The present embodiments also provide a stream or a storage medium tangibly embodying this stream, wherein the stream comprises at least:

- information representative of a video; and
- a piece of information representative of a version of a piece of color mapping information.

4. BRIEF SUMMARY OF THE DRAWINGS

- Figure 1 shows the BT.709, BT.2020 and P3D65 color gamuts in the CIE 1931 xy chromaticity diagram;
- Figure 2 depict on the left side a transmitter and on the right side a receiver;
- Figure 3 depicts a video receiver or player that receives a video stream and color information;
- Figure 4 represents a flowchart of a method for decoding a video stream according to a non-limiting embodiment;
- Figures 5 and 6 depicts different versions of color mapping information;
- Figure 7 represents a flowchart of a method for decoding a video stream according to a specific and non-limiting embodiment;
- Figure 8 represents a flowchart of a method for decoding a video stream according to another specific and non-limiting embodiment;
- Figure 9 represents an exemplary architecture of a receiver configured to decode a video from a stream;
- Figure 10 represents a flowchart of a method for encoding a video in a stream according to a non-limiting embodiment; and
- Figure 11 represents an exemplary architecture of a transmitter configured to encode a video in a stream.

5. DETAILED DESCRIPTION

In the following, the word "reconstructed" and "decoded" can be used interchangeably. It will be appreciated that the present principles are not restricted to a video and can be applied to a single picture.

**Figure 2** depicts on the left side a transmitter 100. The transmitter 100 receives on an input (not represented) a video content. On figure 2 the video content, e.g. a master video, is a P3 video content encapsulated in a BT.2020 container. The received video content is color mapped by a color mapping module 102 into a BT.709 content which is encapsulated in a BT.709 container. The color mapping module 102 is connected to an encoder 104. The encoder 104 is configured to encode the mapped BT.709 content in a stream. The stream may be transmitted via an output of the transmitter (not represented) to a receiver 150. The stream is received on an input (not represented) of the receiver 150 and transmitted to a decoder 112. The decoder 112 is configured to decode the stream. The output of the decoder is a reconstructed video content, in this case a BT.709 content encapsulated in a BT.709 container. The BT.709 content encapsulated in a BT.709 container may further be transmitted via an output (not represented) to a first display 120 that is capable of displaying BT.709 video content. In another embodiment, the decoder 112 is connected to a color mapping module 114. The color mapping module 114 is configured to color map the BT.709 content encapsulated in a BT.709 container into a P3 video content encapsulated in a BT.2020 container. The P3 video content encapsulated in a BT.2020 container may further be transmitted via an output (not represented) to a second display 130 that is capable of displaying BT.2020 video content. The color mapping module 114 is configured to inverse the color mapping achieved by the color mapping module 102.

The color mapping information used by the color mapping module 114 may be determined dynamically on the transmitter side so that it is fully adapted to the content. The colour_remapping_information SEI message of D.2.32 and D.3.32 in ITU-T H.265 may be used to transmit such information. However, in the case of broadcast applications the transmission of such dynamic color mapping information may be costly in terms of bit rate. Also having completely dynamic metadata may be lead to complex receiver implementations. The present principles are directed to a method and an device for reducing the cost and the complexity of the receiver. Therefore, the color mapping information is not transmitted in a stream but color mapping information is stored in a memory of the receiver 150.

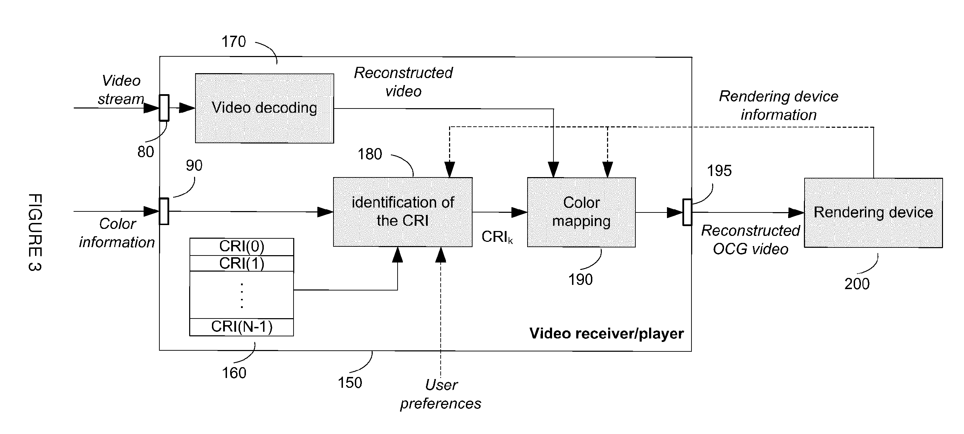

**Figure 3** depicts a video receiver or player 150, that receives a video stream and color information on a first input 80 and on a second input 90 respectively according to a non-limiting embodiment. The first and second inputs can be combined into one and the same input particularly in the case where color information is embedded into the video stream F. The color information is either included in the video stream (for instance in the Picture Parameters Set, in Video Usability Information or in a SEI message as defined in HEVC) or conveyed as side metadata. As an example, the color information is conveyed in metadata as specified in the HEVC standard, such as :

- VUI (English acronym of Video Usability Information): VUI comprises in particular information related to the coded video signal container: color primaries (e.g. BT.709, BT.2020), transfer function (e.g. gamma, PQ), and color space (e.g. Y'CbCr, R'G'B').VUI is defined in Annex E of ITU-T H.265.
- MDCV (English acronym of Mastering Display Color Volume) SEI message: this SEI message contains parameters related to the signal brightness range, the color primaries, and white point of the display monitor used during the grading of video content. MDCV SEI message is defined in

sections D.2.27 and D.3.27 of ITU-T H.265.

The receiver 150 may be connected to an external device (rendering device) 200 that is able to provide information related to its capabilities (supported color gamut, chroma format, chroma sampling format ...). The video receiver 150 produces and provides a reconstructed video to the external device 200. It is considered that the external device supports a color gamut OCG that is different from the input color gamut ICG. When both color gamuts are identical, no specific adaptation (color mapping) process is needed.

The main advantage is to allow backward compatibility with rendering devices supporting lower color gamut than the color gamut of the native content, while preserving the good reconstruction at the receiver side of the content in its native color gamut, for rendering devices supporting this native color gamut.

In addition, the present principles enable to re-use the CRI mechanism for the inverse gamut mapping, which allows a more efficient implementation of the inverse gamut mapping process. For instance, since the CRIs set is defined, the implementation can be accurately optimized for these specific CRIs (e.g. in an hardware implementation). This also avoids or limits the transmission in the stream of content-dependent and dynamic CRI metadata.

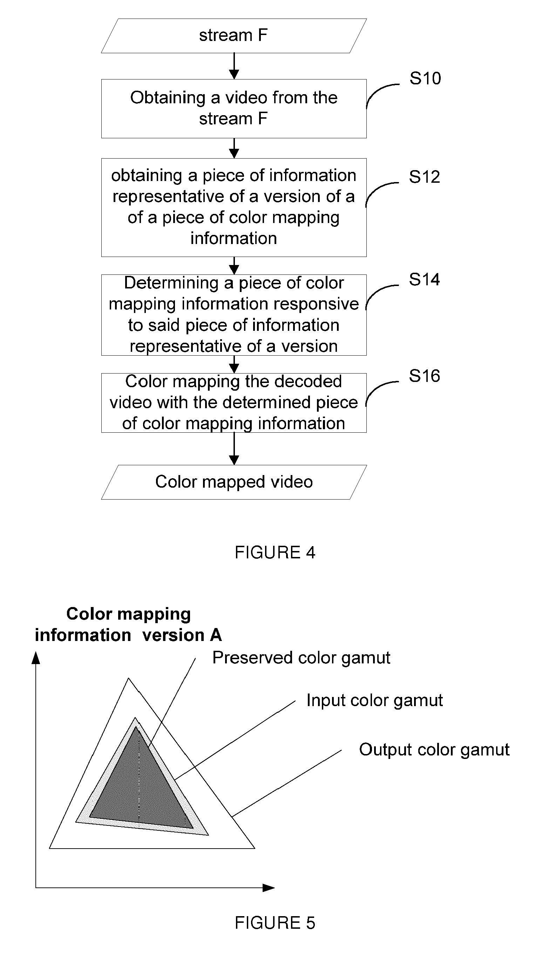

**Figure 4** represents a flowchart of a method for decoding a video stream according to a non-limiting embodiment. On this figure, the boxes are functional units, which may or not be in relation with distinguishable physical units. For example, these modules or some of them may be brought together in a unique component or circuit, or contribute to functionalities of a software. *A contrario,* some modules may be composed of separate physical entities, i.e. processors, circuits, memories, dedicated hardware such ASIC or FPGA or VLSI, respectively «Application Specific Integrated Circuit », « Field-Programmable Gate Array », « Very Large Scale Integration », etc.

At step S10, a video is obtained. For example, the video is decoded from a stream F, for example, using an AVC or HEVC video decoder. The video can be a portion of a largest video. The video may comprise a single picture. It will be appreciated, however, that the present principles are not restricted to this specific AVC and HEVC decoders. Any video decoder can be used. The output of step S10 is a reconstructed video in an Input Color Gamut (ICG), e.g. BT.709.

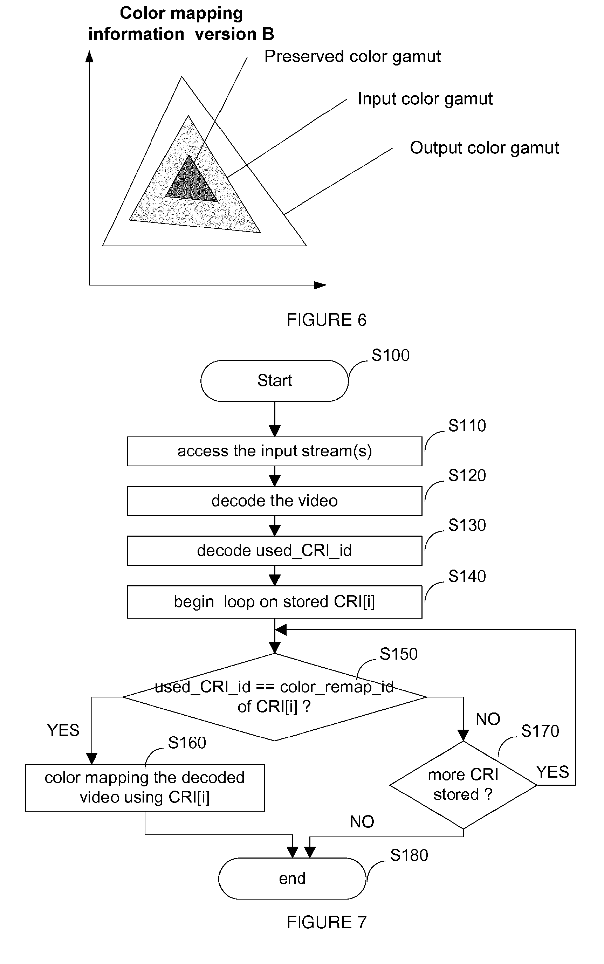

At step S12, a piece of information is obtained that is representative of a version of a piece of color mapping information. It makes it possible to identify a version of a piece of color mapping information. Different versions of a piece of color mapping information favors different sets of colors during the color mapping process. A version of a piece of color mapping information is defined at least for a given input color gamut and a given output color gamut as depicted on **Figures 5** and **6.** In a variant, a version is defined at least for given input and output color gamuts and given input and output color formats (e.g. RGB, YUV, etc). In another variant, a version is defined at least for given input and output color gamuts and given input and output color formats and given mapping gamuts. Indeed, it is possible to specify different pieces of color mapping information for a same setting of input and output color gamuts and optionally same setting of input and output color formats. For instance, a first version A may correspond to a piece of color mapping information favoring the preservation, during the color mapping process, of the samples located inside the input color gamut in disfavor of the samples located outside the input color gamut. A second version B may correspond to a piece of color mapping information favoring the preservation, during the color remapping process, of the samples located outside the input color gamut in disfavor of the samples located inside the input color gamut. These different versions may correspond to different artistic intents. The piece of information obtained at step S12 thus makes it possible to identify one piece of color mapping information among at least two pieces of color mapping information that map colors from the same input color gamut mapping to the same output color gamut mapping while favoring different colors during the color mapping process. A piece of color mapping information corresponding to version A can be computed using a set of video contents (used as learning set) that have most of their color samples located inside the input color gamut and very few of their color samples located outside the input color gamut. A piece of color mapping information corresponding to version B can be computed using a set of video contents (used as learning set) that have many of their color samples located outside the input color gamut.

In a specific and non-limiting embodiment, the piece of information for identifying a piece of color mapping information is decoded from the stream F or from another stream. The piece of information can be an index identifying the version. The index may be a binary flag in the case of two versions are considered as depicted in Table 1. It will be appreciated that the present principles are not restricted to two versions.

**Table 1**

|  | Input | | Output | | version |
|---|---|---|---|---|---|
| index | Color format | Color gamut | Color format | Color gamut |  |
| 0 | Y'CbCr | BT.709 | Y'CbCr | P3 | version A |
| 1 | Y'CbCr | BT.709 | Y'CbCr | P3 | version B |

In this table, the following parameters are introduced:

« input color format » : the color format of the input video on which the gamut mapping process applies. It can typically be Y'CbCr or R'G'B'.

« input color gamut » : the color gamut in which the color samples of the input video content are represented (coded).

« output color format » : the color format of the output video content produced by the gamut mapping process. It can typically be Y'CbCr or R'G'B'.

« output color gamut » : the color gamut in which the color samples of the output video content are represented (coded). In this case, it represents the color gamut in which the color samples of the input are mapped.

The index is not necessarily a binary flag as depicted in table 2.

**Table 2**

|  | Input | | Output | | version |
|---|---|---|---|---|---|
| index | Color | Color | Color | Color |  |
|  |  |  |  |  |  |
|  | format | gamut | format | gamut |  |
| 0 | Y'CbCr | BT.709 | Y'CbCr | P3 | version A |
| 1 | Y'CbCr | BT.709 | Y'CbCr | P3 | version B |
| 2 | Y'CbCr | BT.709 | Y'CbCr | BT.2020 | version A |
| 3 | Y'CbCr | BT.709 | Y'CbCr | BT.2020 | version B |

In the case of more than two pieces of color mapping information mapping from different input and/or output color gamuts, a binary flag may also be sufficient in the case where only two versions exist for given input and output color gamuts as depicted in table 3.

**Table 3**

| | Input | | Output | | version |
|---|---|---|---|---|---|
| index | Color format | Color gamut | Color format | Color gamut | |
| 0 | Y'CbCr | BT.709 | Y'CbCr | P3 | version A |
| 1 | Y'CbCr | BT.709 | Y'CbCr | P3 | version B |
| 0 | Y'CbCr | BT.709 | Y'CbCr | BT.2020 | version A |
| 1 | Y'CbCr | BT.709 | Y'CbCr | BT.2020 | version B |
| 0 | R'G'B' | BT.709 | R'G'B' | P3 | version A |
| 1 | R'G'B' | BT.709 | R'G'B' | P3 | version B |
| 0 | R'G'B' | BT.709 | R'G'B' | BT.2020 | version A |
| 1 | R'G'B' | BT.709 | R'G'B' | BT.2020 | version B |

In the three tables above, the output color gamut and the mapping color gamut are identical. In a variant depicted on Table 4, they are different. In this case, the « output color gamut » is the color gamut in which the color samples of the output video content are represented (coded). The « mapping gamut » is the color gamut in which the color samples of the input are mapped. The mapped color samples are inside this mapped color gamut, even if they are represented (coded) in an output color gamut that may be different from the mapped color gamut. For instance, in the case of a P3 video content encapsulated in a BT.2020 container, the output color gamut is the BT.2020 gamut, while the mapped color gamut is P3. In this case also, the index may be a non-binary index (from 0 to 7).

**Table 4**

| | Input | | Output | | | version |
|---|---|---|---|---|---|---|
| index | Color format | Color gamut | Color format | Color gamut | Mapping gamut | |
| 0 | Y'CbCr | BT.709 | Y'CbCr | BT.2020 | P3 | version A |
| 1 | Y'CbCr | BT.709 | Y'CbCr | BT.2020 | P3 | version B |
| 0 | Y'CbCr | BT.709 | Y'CbCr | BT.2020 | BT.2020 | version A |
| 1 | Y'CbCr | BT.709 | Y'CbCr | BT.2020 | BT.2020 | version B |
| 0 | R'G'B' | BT.709 | R'G'B' | BT.2020 | P3 | version A |
| 1 | R'G'B' | BT.709 | R'G'B' | BT.2020 | P3 | version B |
| 0 | R'G'B' | BT.709 | R'G'B' | BT.2020 | BT.2020 | version A |
| 1 | R'G'B' | BT.709 | R'G'B' | BT.2020 | BT.2020 | version B |

In another variant depicted on Table 5, input and output transfer functions may also be taken into account. The « input transfer function » is the transfer function used to code the input video content. The « output transfer function » is the transfer function used to code the output video content. These transfer functions can correspond to a Gamma function with a parameter of 2.2 (G.2.2) or to a perceptual quantization (PQ) transfer function.

**Table 5**

| index | Input | | | Output | | | Mapping gamut | version |
| --- | --- | --- | --- | --- | --- | --- | --- | --- |
| | Color format | Color gamut | Transfer function | Color format | Color gamut | Transfer function | | |
| 0 | Y'CbCr | BT.709 | G2.2 | Y'CbCr | BT.2020 | PQ | P3 | version A |
| 1 | Y'CbCr | BT.709 | G2.2 | Y'CbCr | BT.2020 | PQ | P3 | version B |
| 0 | Y'CbCr | BT.709 | G2.2 | Y'CbCr | BT.2020 | PQ | BT.2020 | version A |
| 1 | Y'CbCr | BT.709 | G2.2 | Y'CbCr | BT.2020 | PQ | BT.2020 | version B |
| 0 | R'G'B' | BT.709 | G2.2 | R'G'B' | BT.2020 | PQ | P3 | version A |
| 1 | R'G'B' | BT.709 | G2.2 | R'G'B' | BT.2020 | PQ | P3 | version B |
| 0 | R'G'B' | BT.709 | G2.2 | R'G'B' | BT.2020 | PQ | BT.2020 | version A |
| 1 | R'G'B' | BT.709 | G2.2 | R'G'B' | BT.2020 | PQ | BT.2020 | version B |
| 0 | Y'CbCr | BT.709 | G2.2 | R'G'B' | BT.2020 | PQ | P3 | version A |
| 1 | Y'CbCr | BT.709 | G2.2 | R'G'B' | BT.2020 | PQ | P3 | version B |
| 0 | Y'CbCr | BT.709 | G2.2 | R'G'B' | BT.2020 | PQ | BT.2020 | version A |
| 1 | Y'CbCr | BT.709 | G2.2 | R'G'B' | BT.2020 | PQ | BT.2020 | version B |

In this case also, the index may be a non-binary index (from 0 to 11).

In a variant, the version can be further determined via user preference. In such a case the version selected by the user may overwrite the version obtained from the stream. The user can also provide preferred settings for these different parameters, via user preferences. For instance the user may indicate using the "version" parameter if he prefers preserving the BT.709 gamut, or if he prefers having a better preservation of colors outside the BT.709 gamut.

At step S14, a piece of color mapping information is determined responsive to the piece of information identifying a version and obtained at step S12. As an example, the different versions of pieces of color mapping information are stored in a memory. One piece of color mapping information CRI is identified among a set of N pieces of color mapping information CRI[0] ... CRI[N-1]. This set may be stored in a video receiver or player and not transmitted. In a variant, this set may be transmitted at the beginning of a video session, for example during the connection process. In another variant, this set may be transmitted regularly (e.g. each day by firmware update). Each piece of color mapping information CRI[i] may take the form of a 3D LUT, or of a combination of three 1D LUTs ($LUT_{in0}$, $LUT_{in1}$, $LUT_{in2}$) followed by a 3x3 matrix $M_{3x3}$ followed by three 1D LUTs ($LUT_{out0}$, $LUT_{out1}$, $LUT_{out2}$).

As an example with reference to the table 1 above in the case where an index 1 is decoded the version B of a piece of color mapping information is determined that maps from BT.709 to P3 with input and output color formats Y'CbCr.

At step S16, the obtained/decoded video obtained at step S10 is color mapped using the piece of color mapping information determined at step S14. The mapped video may be stored or further transmitted for display. The following equations illustrate the application of a piece of color mapping information to (R,G,B) values of a color sample in the case where it is defined as a combination of three 1D LUTs ($LUT_{in0}$, $LUT_{in1}$, $LUT_{in2}$) followed by a 3x3 matrix $M_{3x3}$ followed by three 1D LUTs ($LUT_{out0}$, $LUT_{out1}$, $LUT_{out2}$):

$$\begin{bmatrix} R_1 \\ G_1 \\ B_1 \end{bmatrix} = \begin{bmatrix} LUT_{in0}[R_{in}] \\ LUT_{in1}[G_{in}] \\ LUT_{in2}[B_{in}] \end{bmatrix}$$

$$\begin{bmatrix} R_2 \\ G_2 \\ B_2 \end{bmatrix} = M_{3x3} \begin{bmatrix} R_1 \\ G_1 \\ B_1 \end{bmatrix}$$

$$\begin{bmatrix} R_{out} \\ G_{out} \\ B_{out} \end{bmatrix} = \begin{bmatrix} LUT_{out0}[R_2] \\ LUT_{out1}[G_2] \\ LUT_{out2}[B_2] \end{bmatrix}$$

where $(R_{in}, G_{in}, B_{in})$ are input color values and $(R_{out}, G_{out}, B_{out})$ are output color values, i.e. after the color mapping.

Figure 7 represents a flowchart of a method for decoding a video stream according to a specific and non-limiting embodiment. The method starts at step S100. At step S110, a receiver accesses one or more stream(s). At step S120, the receiver obtains/decodes the video from one stream F for example, using an AVC or HEVC video decoder. To this aim, the decoder may loop over individual pictures in the input video. At step S130, the receiver decodes a syntax element used_CRI_id that makes it possible to identify a version of a piece of color mapping information. used_CRI_id is decoded from the stream F or from another stream. At step S140, the receiver begins to loop over the pieces of color mapping information CRI[i] stored in a memory of the receiver.

At step S150, the receiver checks whether index used_CRI_id is equal to colour_remap_id. colour_remap_id is one of the parameters defined in the color remapping SEI message defined in section D.2.32 and D.3.32 in ITU-T H.265. If used_CRI_id is equal to colour_remap_id, the receiver color maps the decoded video with the piece of color mapping information CRI[i] associated with colour_remap_id at step S160 and method ends at step S180. Otherwise, if used_CRI_id is not equal to colour_remap_id, the receiver checks whether more pieces of color mapping information CRI[i] are stored at step S170. If yes, the control returns to step S150. Otherwise, method ends at step S180. The piece of color mapping information, e.g. a CRI, can be directly selected as the one which has its parameter colour_remap_id equal to used_CRI_id.

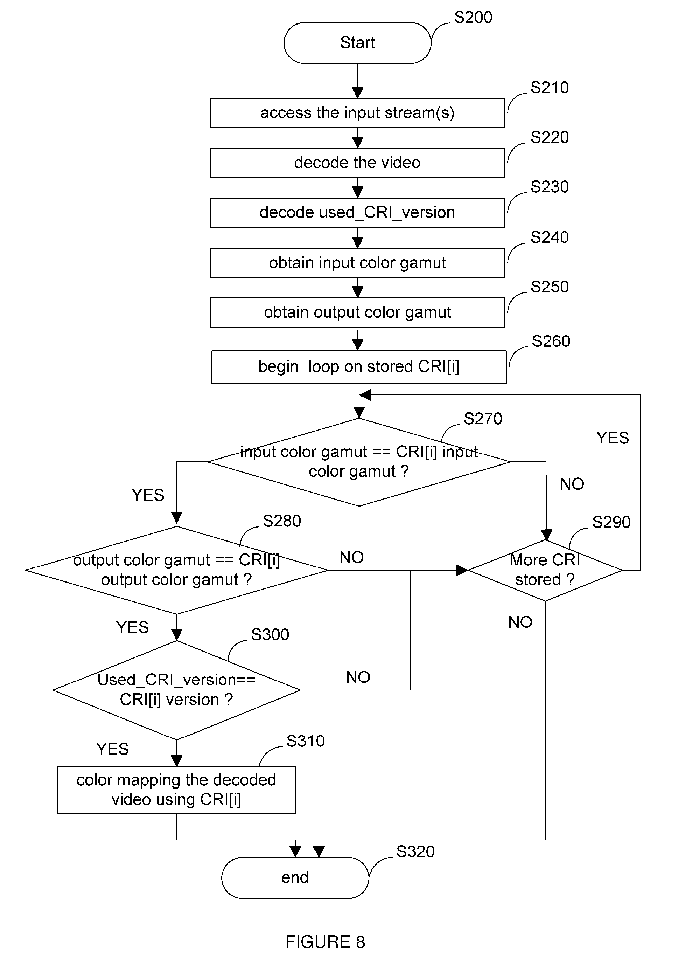

Figure 8 represents a flowchart of a method for decoding a video stream according to another specific and non-limiting embodiment. In the case where used_CRI_id is not present in the stream, additional information, namely the information mentioned in the above in tables 1 to 3, is needed to determine a piece of color mapping information. The method starts at step S200. At step S210, a receiver accesses one or more stream(s). At step S220, the receiver decodes the video from a stream F using for example an AVC or HEVC video decoder. To this aim, the decoder may loop over individual pictures in the input video. At step S230, the receiver decodes a syntax element used_CRI_version from a stream (stream F or another stream) representative of a version of color mapping information. used_CRI_version makes it possible to indicate which version of color mapping information has to be used in the case where several pieces of color mapping information correspond to the same « input color gamut », « output/mapping color gamut ». It corresponds to the « version » parameter of tables 1 to 5. Advantageously, used_CRI_version is a binary flag in the case of 2 versions.

At step S240 an input color gamut is obtained. The input color gamut is for example decoded from a stream that may be the stream F or another stream (side metadata). This information is typically provided in the VUI . At step S250 an output color gamut is obtained. The output color gamut is for example obtained from the rendering device information. In a variant (not represented), a mapping color gamut is further obtained. It is used with Tables 4 and 5. This information is typically provided in the MDCV SEI message. At step S260, the receiver begins to loop over the pieces of color mapping information CRI[i] stored in a memory of the receiver. At step S270, the receiver checks whether the obtained input color gamut is identical to a CRI[i] input color gamut. If the obtained input color gamut is identical to the CRI[i] input color gamut, the receiver further checks S280 whether the obtained output color gamut is identical to a CRI[i] output color gamut. Otherwise, if the obtained input color gamut is different from the CRI[i] input color gamut, the receiver checks whether more pieces of color mapping information CRI[i] are stored at step S290. If yes, the control returns to step S270. Otherwise, method ends at step S320. If the obtained output color gamut is identical to the CRI[i] output color gamut, the receiver further checks S300 whether used_CRI_version is identical to a CRI[i] version. Otherwise, if the obtained output color gamut is different from the CRI[i] output color gamut, the receiver checks whether more pieces of color mapping information CRI[i] are stored at step S290. If yes, the control returns to step S270. Otherwise, method ends at step S320. If used_CRI_version is identical to the CRI[i] version, the receiver color maps the decoded video with the piece of color mapping information CRI[i] at step S310 and method ends at step S320. Otherwise, if used_CRI_version is different from the CRI[i] version, the receiver checks whether more pieces of color mapping information CRI[i] are stored at step S290. If yes, the control returns to step S270. Otherwise, method ends at step S320.

In variants (not represented), other information may be used. As an example, the receiver may further check whether an obtained input color format is identical to a CRI[i] input color format. The input color format may be obtained from a stream. This information is typically provided in the VUI . The receiver may also check whether an obtained output color format is identical to a CRI[i] output color format. The output color format is for example obtained from the rendering device information. In another example, the receiver may checks whether an obtained input transfer function is identical to a CRI[i] input transfer function and whether an obtained output transfer function is identical to a CRI[i] output transfer function. The input transfer function is for example obtained from a stream, e.g. directly derived from on OETF (English acronym of Opto-Electrical Transfer Function). This information is typically provided in the VUI. The output transfer function may be obtained from the rendering device information. It is the same as the OETF supported by the external device.

Other information that is useful to the receiver to identify the piece of color mapping information to be applied is the color gamut and the chroma format supported by the external device. They can be used to identify the "output color format", "output color gamut" and "output transfer function" of tables 1 to 5.

Other information such as the supported bit-depth of the different components of the color samples can also be useful.

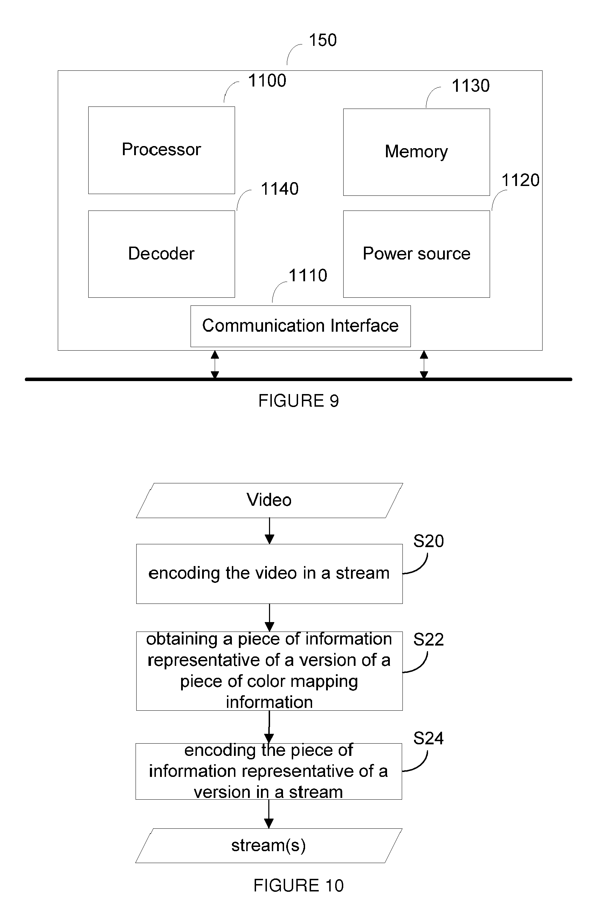

**Figure 9** represents an exemplary architecture of the receiver 150 configured to decode a video from a stream according to a non-limiting embodiment.

The receiver 150 comprises one or more processor(s) 1100 , which could comprise, for example, a CPU, a GPU and/or a DSP (English acronym of Digital Signal Processor), along with internal memory 1510 (e.g. RAM, ROM and/or EPROM). The receiver 150 comprises one or more communication interface(s) 1110, each adapted to display output information and/or allow a user to enter commands and/or data (e.g. a keyboard, a mouse, a touchpad, a webcam); and a power source 1120 which may be external to the receiver 150. The receiver 150 may also comprise one or more network interface(s) (not shown). Decoder module 1140 represents the module that may be included in a device to perform the decoding functions. Additionally, decoder module 1140 may be implemented as a separate element of the receiver 150 or may be incorporated within processor(s) 1100 as a combination of hardware and software as known to those skilled in the art.

The stream may be obtained from a source. According to different embodiments, the source can be, but not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an picture capturing circuit (e.g. a sensor such as, for example, a CCD (or Charge-Coupled Device) or CMOS (or Complementary Metal-Oxide-Semiconductor)).

According to different embodiments, the decoded video may be sent to a destination, e.g. a display device. As an example, the decoded video is stored in a remote or in a local memory, e.g. a video memory or a RAM, a hard disk. In a variant, the decoded video is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the receiver 150 further comprises a computer program stored in the memory 1130. The computer program comprises instructions which, when executed by the receiver 150, in particular by the processor 1100, enable the receiver to execute the method described with reference to figure 3. According to a variant, the computer program is stored externally to the receiver 150 on a non-transitory digital data support, e.g. on an external storage medium such as a HDD, CD-ROM, DVD, a read-only and/or DVD drive and/or a DVD Read/Write drive, all known in the art. The receiver 150 thus comprises a mechanism to read the computer program. Further, the receiver 150 could access one or more Universal Serial Bus (USB)-type storage devices (e.g., "memory sticks.") through corresponding USB ports (not shown).

According to exemplary and non-limiting embodiments, the receiver 150 can be, but not limited to:

- a mobile device ;
- a communication device ;
- a game device ;

- a set top box;
- a TV set;
- a tablet (or tablet computer) ;
- a laptop ;
- a display and
- a decoding chip.

**Figure 10** represents a flowchart of a method for encoding a video in a stream according to a non-limiting embodiment. On this figure, the boxes are functional units, which may or not be in relation with distinguishable physical units. For example, these modules or some of them may be brought together in a unique component or circuit, or contribute to functionalities of a software. *A contrario,* some modules may be composed of separate physical entities, i.e. processors, circuits, memories, dedicated hardware such ASIC or FPGA or VLSI, respectively «Application Specific Integrated Circuit », « Field-Programmable Gate Array », « Very Large Scale Integration », etc.

At step S20, a video is encoded in a stream F, for example, using an AVC or HEVC video encoder. The video can be a portion of a largest video. The video may comprise a single picture. It will be appreciated, however, that the present principles are not restricted to this specific AVC and HEVC encoders. Any video encoder can be used. The video may be a color map version of a master video.

At step S22, a piece of information is obtained that is representative of a version of a piece of color mapping information. It makes it possible to identify a version of a piece of color mapping information. As an example, the piece of information is specified by a user, e.g. by a director of photography.

At step S24, the piece of information obtained at step S30 is encoded in a stream that may be the stream F.

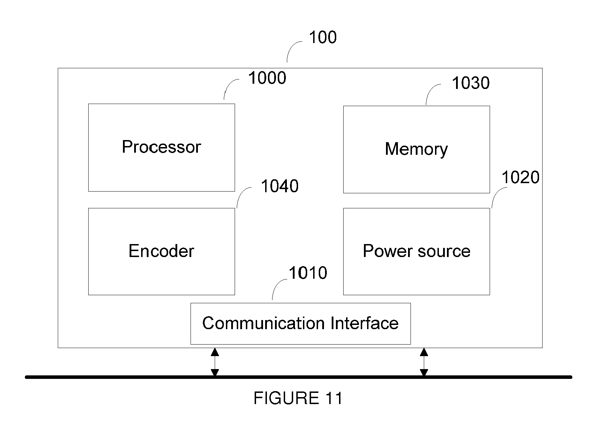

**Figure 11** represents an exemplary architecture of the transmitter 100 configured to decode a video from a stream according to a non-limiting embodiment.

The transmitter 100 comprises one or more processor(s) 1000, which could comprise, for example, a CPU, a GPU and/or a DSP (English acronym of Digital Signal Processor), along with internal memory 1030 (e.g. RAM, ROM, and/or EPROM). The transmitter 100 comprises one or more communication interface(s) 1010, each adapted to display output information and/or allow a user to enter commands and/or data (e.g. a keyboard, a mouse, a touchpad, a webcam); and a power source 1020 which may be external to the transmitter 100. The transmitter 100 may also comprise one or more network interface(s) (not shown). Encoder module 1040 represents the module that may be included in a device to perform the coding functions. Additionally, encoder module 1140 may be implemented as a separate element of the transmitter 100 or may be incorporated within processor(s) 1000 as a combination of hardware and software as known to those skilled in the art.

The enhancement layer picture or the at least one block of the enhancement layer picture may be obtained from a source. According to different embodiments, the source can be, but is not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the stream may be sent to a destination. As an example, the stream is stored in a remote or in a local memory, e.g. a video memory or a RAM, a hard disk. In a variant, the stream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 100 further comprises a computer program stored in the memory 1030. The computer program comprises instructions which, when executed by the transmitter 100, in particular by the processor 1000, enable the transmitter 100 to execute the method described with reference to figure 10. According to a variant, the computer program is stored externally to the transmitter 100 on a non-transitory digital data support, e.g. on an external storage medium such as a HDD, CD-ROM, DVD, a read-only and/or DVD drive and/or a DVD Read/Write drive, all known in the art. The transmitter 100 thus comprises a mechanism to read the computer program. Further, the transmitter 100 could access one or more Universal Serial Bus (USB)-type storage devices (e.g., "memory sticks.") through corresponding USB ports (not shown).

According to exemplary and non-limiting embodiments, the transmitter 100 can be, but is not limited to:

- a mobile device ;
- a communication device ;

- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

The implementations described herein may be implemented in, for example, a method or a process, an device, a software program, a data stream, or a signal. Even if only discussed in the context of a single form of implementation (for example, discussed only as a method or a device), the implementation of features discussed may also be implemented in other forms (for example a program). An device may be implemented in, for example, appropriate hardware, software, and firmware. The methods may be implemented in, for example, an device such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method comprising :

      obtaining (S10) a video from a stream;
      obtaining (S12) a piece of information representative of a version of a piece of color mapping information;

determining (S14) a piece of color mapping information responsive to said piece of information representative of a version; and
color mapping (S16) the obtained video with said determined piece of color mapping information.

2. The method of claim 1, wherein obtaining a piece of information representative of a version of a piece of color mapping information comprises decoding an identifier from a stream indicating a version of a piece of color mapping information.

3. A device comprising a communication interface configured to access at least one stream and at least one processor configured to:

obtain a video from the at least one stream;
obtain a piece of information representative of a version of a piece of color mapping information;
determine a piece of color mapping information responsive to said piece of information representative of a version; and
color map the obtained video with said determined piece of color mapping information.

4. The device of claim 3, wherein to obtain a piece of information representative of a version of a piece of color mapping information comprises decoding an identifier from a stream indicating a version of a piece of color mapping information.

5. A method comprising :

encoding (S20) a video in a stream;
obtaining (S22) a piece of information representative of a version of a piece of color mapping information;
encoding (S24) said piece of information representative of a version.

6. The method of claim 5, wherein encoding said piece of information representative of a version of a piece of color mapping information comprises encoding an identifier in a stream indicating a version of a piece of color mapping information.

7. A device comprising a communication interface configured to access at least one video and at least one processor configured to:

encode said at least one video in a stream;
obtain a piece of information representative of a version of a piece of color mapping information; and
encode said piece of information representative of a version.

8. The device of claim 7, wherein to encode said piece of information representative of a version of a piece of color mapping information comprises encoding an identifier in a stream indicating a version of a piece of color mapping information.

9. A computer program product comprising program code instructions to execute the steps of the method according to any of claims 1 to 2 when this program is executed on a computer.

10. A computer program product comprising program code instructions to execute the steps of the method according to any of claims 5 to 6 when this program is executed on a computer.

FIGURE 1

FIGURE 2

FIGURE 3

stream F

Obtaining a video from the
stream F ⟍ S10

obtaining a piece of information
representative of a version of a
of a piece of color mapping
information ⟍ S12

Determining a piece of color
mapping information responsive
to said piece of information
representative of a version ⟍ S14

Color mapping the decoded
video with the determined piece
of color mapping information ⟍ S16

Color mapped video

FIGURE 4

**Color mapping
information  version A**

Preserved color gamut

Input color gamut

Output color gamut

FIGURE 5

**Color mapping information version B**

FIGURE 6

FIGURE 7

FIGURE 8

150

1100

1130

Processor

Memory

1140

1120

Decoder

Power source

1110

Communication Interface

FIGURE 9

Video

encoding the video in a stream

S20

obtaining a piece of information representative of a version of a piece of color mapping information

S22

encoding the piece of information representative of a version in a stream

S24

stream(s)

FIGURE 10

100

1000

Processor

1030

Memory

1040

Encoder

1020

Power source

1010

Communication Interface

FIGURE 11

Europäisches
Patentamt

European
Patent Office

Office européen
des brevets

# EUROPEAN SEARCH REPORT

Application Number

EP 15 30 6172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/054143 A1 (DOLBY LAB LICENSING CORP [US]; WAN CHUN CHI [CA]; MESSMER NEIL W [CA]) 26 April 2012 (2012-04-26) * page 8, line 15 - page 13, line 5 * ----- | 1-10 | INV. H04N9/67 |
| X | WO 2007/078563 A2 (THOMSON LICENSING [FR]; DOSER INGO TOBIAS [US]) 12 July 2007 (2007-07-12) * paragraph [0041] - paragraph [0045]; figure 5 * ----- | 1-10 | |

TECHNICAL FIELDS
SEARCHED       (IPC)

H04N

The present search report has been drawn up for all claims

| Place of search | Date of completion of the search | Examiner |
|---|---|---|
| Munich | 23 December 2015 | Penchev, Petyo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 6172

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2015

| Patent document cited in search report | | | Publication date | Patent family member(s) | | | Publication date |
|---|---|---|---|---|---|---|---|
| WO 2012054143 | A1 | | 26-04-2012 | CN | 103155535 | A | 12-06-2013 |
| | | | | EP | 2630783 | A1 | 28-08-2013 |
| | | | | KR | 20130107314 | A | 01-10-2013 |
| | | | | US | 2013194321 | A1 | 01-08-2013 |
| | | | | WO | 2012054143 | A1 | 26-04-2012 |
| WO 2007078563 | A2 | | 12-07-2007 | CN | 101346984 | A | 14-01-2009 |
| | | | | EP | 1964389 | A2 | 03-09-2008 |
| | | | | JP | 2009521840 | A | 04-06-2009 |
| | | | | JP | 2015122804 | A | 02-07-2015 |
| | | | | KR | 20080077993 | A | 26-08-2008 |
| | | | | US | 2009284554 | A1 | 19-11-2009 |
| | | | | WO | 2007078563 | A2 | 12-07-2007 |

EPO FORM P0459

For more details about this annex : see Official Journal of the European Patent Office, No. 12/82